(19) Europäisches Patentamt
European Patent Office
Office européen des brevets

(11) **EP 3 397 027 B1**

(12) **EUROPEAN PATENT SPECIFICATION**

(45) Date of publication and mention
of the grant of the patent:
**16.09.2020 Bulletin 2020/38**

(51) Int Cl.:
**H05B 45/37** *(2020.01)*

(21) Application number: **18168944.9**

(22) Date of filing: **24.04.2018**

(54) **POWER SUPPLY MODULE FOR A LIGHTING SYSTEM, RELATED LIGHTING SYSTEM AND METHOD**

STROMVERSORGUNGSMODUL FÜR EIN BELEUCHTUNGSSYSTEM, ZUGEHÖRIGES BELEUCHTUNGSSYSTEM UND VERFAHREN

MODULE D'ALIMENTATION ÉLECTRIQUE POUR UN SYSTÈME D'ÉCLAIRAGE, SYSTÈME ET PROCÉDÉ D'ÉCLAIRAGE ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.04.2017 IT 201700045890**

(43) Date of publication of application:
**31.10.2018 Bulletin 2018/44**

(73) Proprietor: **SITECO GmbH**
**83301 Traunreut (DE)**

(72) Inventors:
• **PENGO, Mr. Ermes**
**I-31038 Paese (Treviso) (IT)**
• **STIVAL, Mr. Davide**
**I-31022 Preganziol (Treviso) (IT)**

(74) Representative: **Schmidt, Steffen et al**
**Boehmert & Boehmert**
**Anwaltspartnerschaft mbB**
**Pettenkoferstrasse 22**
**80336 München (DE)**

(56) References cited:
**US-A1- 2008 164 759    US-A1- 2011 285 291**
**US-A1- 2014 021 882**

## Description

<u>Field of the invention</u>

The description refers to lighting systems.

<u>Description of the prior art</u>

A lighting system typically comprises an electronic converter 10 and at least one lighting module 20. For example, the electronic converter 10 may comprise an AC/DC or DC/DC switching power supply that receives a power supply input signal (for example, from the power line or a battery) and outputs a regulated voltage $V_{out}$ or a regulated current $i_{out}$. A lighting module 20 comprises one or more light sources comprising, for example, at least one LED (Light Emitting Diode) or other solid-state lighting means, such as, for example, laser diodes.

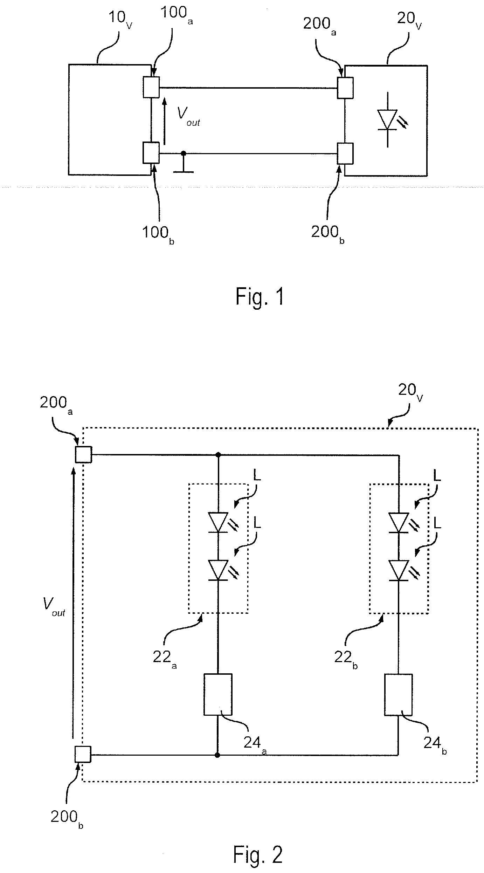

For example, Figure 1 shows a lighting system, in which the electronic converter is a voltage generator $10_V$ and, similarly, the lighting module 20 is a module $20_V$ configured to be powered by a voltage.

Therefore, in Figure 1, the electronic converter $10_V$ outputs a regulated voltage $V_{out}$ by means of a positive terminal 100a and a negative terminal 100b, which represents a voltage reference.

For example, Figure 2 shows an example of a lighting module $20_V$ configured to be powered by a regulated voltage $V_{out}$. In particular, the lighting module $20_V$ comprises a positive input terminal 200a and a negative input terminal 200b for connecting to the terminals 100a and 100b of the electronic converter $10_V$. For example, the lighting module $20_V$ can be connected directly or through a cable to the electronic converter $10_V$. Therefore, the terminal 200a is connected to the terminal 100a and the terminal 200b is connected to the terminal 100b, and the lighting module 20 therefore receives the voltage $V_{out}$.

In the example considered, the lighting module $20_V$ is an LED module comprising one or more LEDs L connected between the terminals 200a and 200b. For example, the module $20_V$ may include a chain or string of LEDs (LED chain or string) 22, in which a plurality of LEDs L is connected in series. In addition, the LEDs L can also be divided over several branches connected in parallel. For example, as shown in Figure 2, the module $20_V$ may comprise a first string of LEDs 22a comprising a first set of LEDs L connected in series, and a second string of LEDs 22b comprising a second set of LEDs L connected in series.

Since the lighting module $20_V$ is supplied with a voltage, the lighting module $20_V$ typically comprises a current regulator 24 connected in series with each string of LEDs 22. For example, in Figure 2, the first LED string 22a and a first current regulator 24a are connected (for example, directly) in series between the terminals 200a and 200b, and the second string of LEDs 22b and a second current regulator 24b are connected (for example, directly) in series between the terminals 200a and 200b. Therefore, in the considered example, the strings 22a and 22b are powered by means of a common voltage ($V_{out}$).

In the simplest case, the current regulator 24 can be a resistor or a linear current regulator. The current regulator 24 can also be implemented with current mirrors or with a switched mode current source, typically comprising an inductor and an electronic switch.

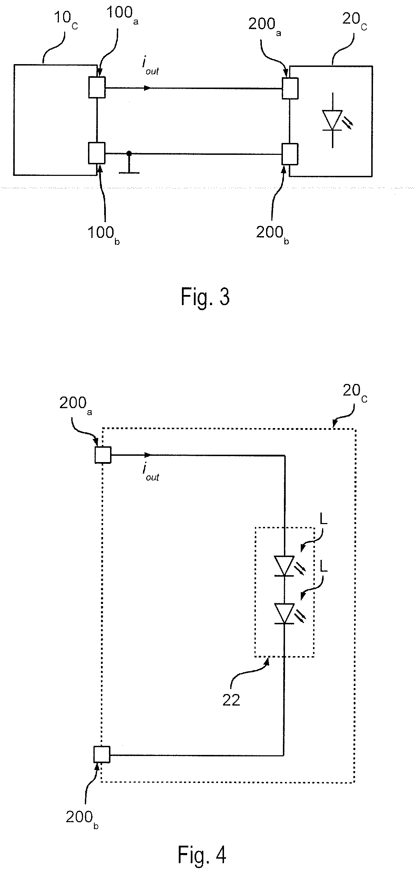

Instead, Figure 3 shows a lighting system, in which the electronic converter 10 is a current generator $10_C$, i.e. the electronic converter $10_C$ provides at output by means of the positive terminal 100a and the negative terminal 100b, which again represents a voltage reference, a regulated current $i_{out}$.

Similarly, the lighting module 20 is a module $20_C$ configured to be powered by a current. As shown in Figure 4, a lighting module $20_C$ may comprise a string of LEDs 22 comprising a plurality of LEDs L connected (for example, directly) in series between the terminals 200a and 200b.

In many applications there may be a requirement for the power supply of a plurality of lighting modules 20. In general, these lighting modules 20 may differ from one another by various factors, for example, in relation to the number and type of LEDs, the operating temperature or other parameters. Furthermore, individual driving of the lighting modules 20 may be required, for example, to switch specific lighting modules 20 on or off. Furthermore, it may be required that the brightness of the light emitted by each lighting module 20 is individually adjustable (so-called *dimming*).

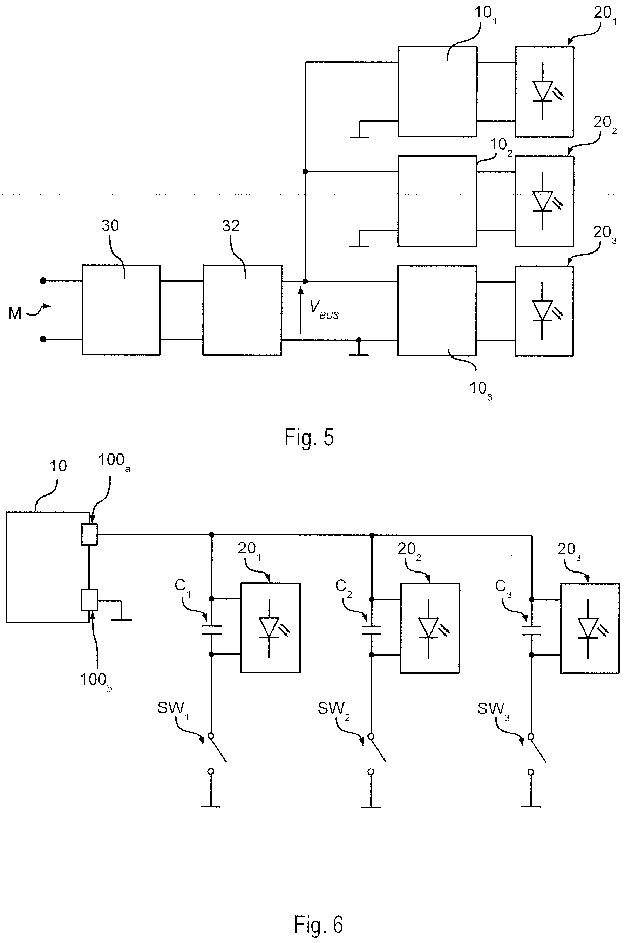

Figures 5 and 6 illustrate two possible solutions that can be used for this purpose. In particular, Figure 5 shows an example, in which each lighting module 20 (i. e. $20_V$ or $20_C$) is supplied by means of a respective electronic converter 10. In particular, in the example considered, three lighting modules $20_1$, $20_2$ and $20_3$ are shown, which are supplied by means of three current generators $10_1$, $10_2$ and $10_3$, such as "buck" converters. In general, the electronic converters 10 can provide a regulated voltage or preferably a regulated current.

Therefore, each converter 10 can individually control the operation of the respective lighting module 20. For example, in this solution, each converter 10 can carry out a dimming operation by adjusting the average current that passes through the lighting module 20, for example, by adjusting the amplitude of the current (in the case in which the converters 10 are current generators) and/or by switching on/off the respective lighting module 20, for example, by using a pulse width modulation signal (PWM). Typically, the frequency of the PWM (for example, between 100 Hz and 2 kHz) is low with respect to the switching frequency of the electronic converter 10 (for example, between 10 and 100 kHz).

In general, the electronic converters $10_1$, $10_2$ and $10_3$ can also use the same rectifier circuit 30 and/or an additional electronic converter 32, such as a converter with correction of the power factor, can be used to provide the power supply, such as, for example, a regulated voltage $V_{Bus}$, to the electronic converters $10_1$, $10_2$ and $10_3$.

This solution has the advantage that each electronic converter 10 can have a low power, i.e. that of the respective lighting module. Furthermore, malfunctioning of a single lighting module 20 or electronic converter 10 does not typically affect the operation of the other lighting modules 20 and electronic converters 10.

Instead, Figure 6 shows a solution, in which the lighting modules 20, for example, again three lighting modules $20_1$, $20_2$ and $20_3$, are selectively connected to the same electronic converter 10, i.e. the lighting modules 20 are selectively supplied with power. For example, a solution of this type is described in the American patent application US 2010/0295472 A1 or in the Italian patent application IT102016000080749.

In particular, in this solution, the electronic converter 10, such as a flyback converter, supplies several branches, one for each lighting module 20. In particular, with each branch is associated a respective lighting module 20 and an electronic switch SW. Therefore, for the exemplary case of three lighting modules $20_1$, $20_2$ and $20_3$ there are three electronic switches $SW_1$, $SW_2$ and $SW_3$. These switches SW are controlled in such a way as to selectively connect the lighting modules 20 to the electronic converter 10. In general, each lighting module 20 may also have associated a capacitor ($C_1$, $C_2$ and $C_3$), which stabilizes the power supplied to the lighting module 20.

In particular, if the converter 10 is a current generator (see document US 2010/0295472 A1), only one of the branches is connected to the electronic converter 10, that is, only one of the switches $SW_1$, $SW_2$ and $SW_3$ is closed during a certain time interval. Therefore, by sequentially activating the switches SW, the lighting modules $20_1$, $20_2$ and $20_3$ can be supplied alternately. Typically, the converter also has associated, in this case, a protection circuit configured to protect the electronic converter in the event that no lighting module 20 is connected to the output of the electronic converter 10.

On the other hand, if the converter 10 is a voltage generator (see document IT102016000080749), a plurality of lighting modules 20 may also be connected simultaneously to the electronic converter 10 (respecting the maximum power capacity that the electronic converter can provide).

For example, in the solution of Figure 6, the dimming operation can be performed by adjusting the duration during which each lighting module 20 is connected to the electronic converter 10. This solution therefore has the advantage that only a single electronic converter 10 is required. However, this converter 10 must be able to supply power to all the lighting modules 20. Furthermore, by increasing the number of lighting modules, the operating time of each lighting module may become too short.

The present invention relates, thus, to a power supply module for a lighting system according to the preamble of Claims 1 and 2, which is known, e.g. from US 2008/164759 A1.

Object and summary

The present description aims to provide solutions for powering a plurality of lighting modules.

According to various embodiments, this object is achieved thanks to a power supply module having the characteristics referred to in the following claims. The claims also concern a relative lighting system and method.

The claims form an integral part of the technical disclosure provided here in relation to the invention.

As mentioned previously, various embodiments of the present description provide solutions for powering a plurality of lighting modules. In various embodiments, this object is achieved by means of a power supply module. For example, this power supply module can be implemented on a single printed circuit.

In various embodiments, the power supply module comprises an electronic converter comprising a positive terminal and a negative terminal, in which the electronic converter is configured to generate a power supply signal, for example, a regulated voltage or current, at these terminals.

In various embodiments, the power supply module comprises a first positive terminal and a first negative terminal configured to be connected to a first lighting module, in which the first negative terminal is connected to the negative terminal of the electronic converter.

In various embodiments, the power supply module also comprises a second positive terminal for connecting to a second lighting module. A second negative terminal may also be provided, which is connected to the negative terminal of the electronic converter, or the negative terminal of the second lighting module may be connected externally to the first negative terminal.

In various embodiments, the power supply module comprises switching means configured for selectively connecting the positive terminal of the electronic converter to the first positive terminal or to the second positive terminal, i.e. to the first or second lighting module. For example, the switching means may comprise a first electronic switch connected between the positive terminal of the electronic converter and the first positive terminal, and a second electronic switch connected between the positive terminal of the electronic converter and the second positive terminal.

In various embodiments, the power supply module comprises an additional terminal configured to be connected to an additional power supply module to receive an additional power supply signal from the additional power supply module. In this case, the switching means can be configured to selectively connect the additional terminal to the second positive terminal, i.e. to the second lighting module. For example, in various embodiments, the switching means may comprise a third electronic switch connected between said additional terminal and the second positive terminal.

Therefore, in various embodiments, the second lighting module may be powered by means of the electronic converter or the additional power supply module. For example, this allows the first lighting module to be powered by the electronic converter and, at the same time, the second lighting module can be powered by means of the additional power supply module. Alternatively, it is possible that only the second lighting module is powered, for example, in the case where a malfunction of the electronic converter is detected.

Therefore, using a plurality of power supply modules according to the present description, it is possible to produce lighting systems that allow selective connection of the various lighting modules to the electronic converters that are provided in the various power supply modules. To drive the switching of the switching means, each power supply module may also comprise a control terminal for receiving a control signal and a control circuit configured to drive the switching means as a function of this received control signal.

In various embodiments, the power supply module therefore also allows the power generated by the electronic converter to be supplied to an additional power supply module.

For example, the power supply module may comprise a separate output terminal for also providing the power supply generated by the electronic converter to an additional power supply module. For example, for this purpose, the positive terminal of the electronic converter can be connected (for example, directly) to this output terminal.

Instead, in other embodiments, a single terminal is used to provide the power supply generated by the electronic converter to the additional power supply module, or to receive the additional power supply signal from the additional power supply module. In this case, the switching means may comprise a fourth electronic switch connected between the positive terminal of the electronic converter and the single terminal.

Brief description of the attached representations

Embodiments will be now described, purely by way of non-limiting example, with reference to the attached representations, wherein:

- Figures 1 to 6 have already been described previously
- Figure 7 shows a first embodiment of a lighting system according to the present description;
- Figure 8 shows a second embodiment of a lighting system according to the present description;
- Figures 9a, 9b, 9c and 9d illustrate possible controls in the systems of Figures 7 and 8;
- Figure 10 shows a third embodiment of a lighting system according to the present description;
- Figure 11 shows a fourth embodiment of a lighting system according to the present description;
- Figure 12 shows a fifth embodiment of a lighting system according to the present description;
- Figure 13 shows a sixth embodiment of a lighting system according to the present description;
- Figure 14 shows a seventh embodiment of a lighting system according to the present description;
- Figures 15a, 15b, 15c and 15d show various configurations of the system of Figure 14; and
- Figures 16 and 17 show further embodiments of the system of Figure 14.

Detailed description of embodiments

In the following description, various specific details are illustrated aimed at a thorough understanding of the embodiments. The embodiments may be implemented without one or more of the specific details, or with other methods, components, materials, etc. In other cases, known structures, materials or operations are not shown or described in detail to avoid obscuring various aspects of the embodiments.

The reference to "an embodiment" in the context of this description indicates that a particular configuration, structure or characteristic described in relation to the embodiment is included in at least one embodiment. Therefore, phrases such as "in an embodiment", possibly present in different places of this description do not necessarily refer to the same embodiment. Moreover, particular configurations, structures or characteristics can be combined in any convenient way in one or more embodiments.

The references used here are only for convenience and do not therefore define the field of protection or the scope of the embodiments.

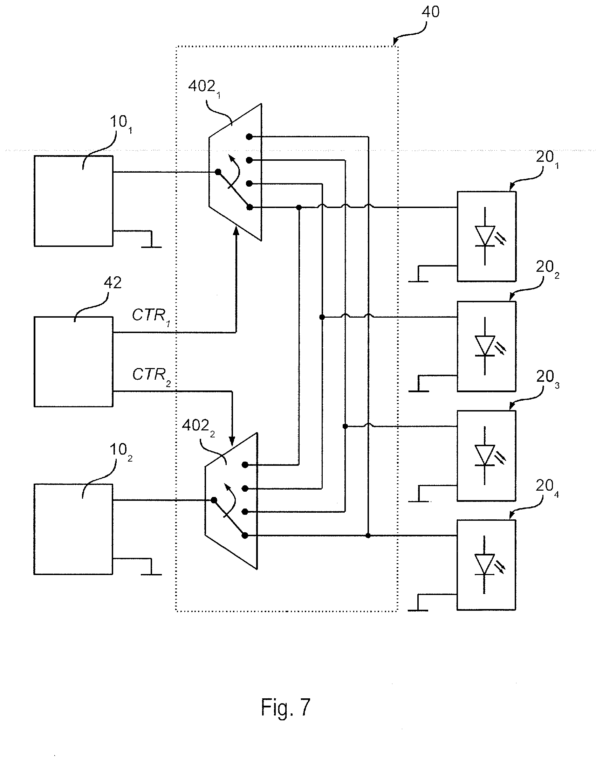

In the following Figures 7 to 17, the parts, elements or components that have already been described with reference to Figures 1 to 6 are indicated with the same references used previously in these Figures; the description of these elements previously described will not be repeated again in order not to overload the present detailed description.

As mentioned previously, the present disclosure provides solutions for powering a plurality of lighting modules 20.

In particular, the inventors have observed that in the solutions described with reference to Figures 5 and 6 there are often situations in which the actual load does not exploit the maximum power capacity of the electronic converter(s) 10.

For example, in Figure 5, there are often situations in which the lighting modules 20 may not be simultaneously switched on, for example, because each module 20 is supplied with a PWM modulated power supply signal or because the lighting modules 20 are not used at the same time, i.e. some modules are switched off.

This disadvantage is overcome by means of the solution shown in Figure 6, in which the power supplied by the electronic converter 10 is selectively transferred to the lighting modules 20 that should be switched on.

However, the solution shown in Figure 6 has the disadvantage that an electronic converter 10 with a high power, which is capable of powering the maximum number of usable lighting modules 20 should be used. This also implies that the electronic converter 10 often operates at a lower power that normally also lowers the efficiency of the electronic converter 10, i.e. the losses increase. Furthermore, increasing the number of lighting modules reduces the operating time of each lighting module.

Figure 7 shows a first embodiment of a lighting system capable of overcoming such problems.

In particular, in the embodiment, several electronic converters 10 and several lighting modules 20 are provided. In particular, in various embodiments, the number of lighting modules 20 is greater than the number of electronic converters 10.

Furthermore, the system comprises switching means 40 connected between the electronic converters 10 and the lighting modules 20. In particular, these switching means 40 are configured to selectively connect the lighting modules 20 to the electronic converters 10.

In various embodiments, the switching means 40 have associated an control circuit 42, such as, for example, an analog and/or digital circuit, such as, for example, a microprocessor programmed by means of software code, which generates the control signals $CTR$ for the switching means 40. In particular, in various embodiments, the control circuit 42 drives the switching means 40 so as to connect, at most, a single lighting module 20 to each electronic converter 10.

For example, in the embodiment considered, the lighting system comprises two electronic converters $10_1$ and $10_2$ and four lighting modules $20_1$, $20_2$, $20_3$ and $20_4$.

For example, in the embodiment considered, the switching means 40 are implemented with two power de-multiplexers $402_1$ and $402_2$, which are configured to forward, respectively, the power supplied by the electronic converters $10_1$ and $10_2$ to the four lighting modules $20_1$, $20_2$, $20_3$, and $20_4$ as a function of a respective control signal $CTR_1$ and $CTR_2$, i.e. each electronic converter $10_1$ and $10_2$ can be connected to one of the four lighting modules $20_1$, $20_2$, $20_3$ and $20_4$ by means of the respective power de-multiplexer $402_1$ and $402_2$. Therefore, in the embodiment considered the control circuit 42 drives the power de-multiplexers $402_1$ and $402_2$, so as to connect the lighting modules $20_1$, $20_2$, $20_3$ and $20_4$ that require a power supply to the electronic converters $10_1$ and $10_2$.

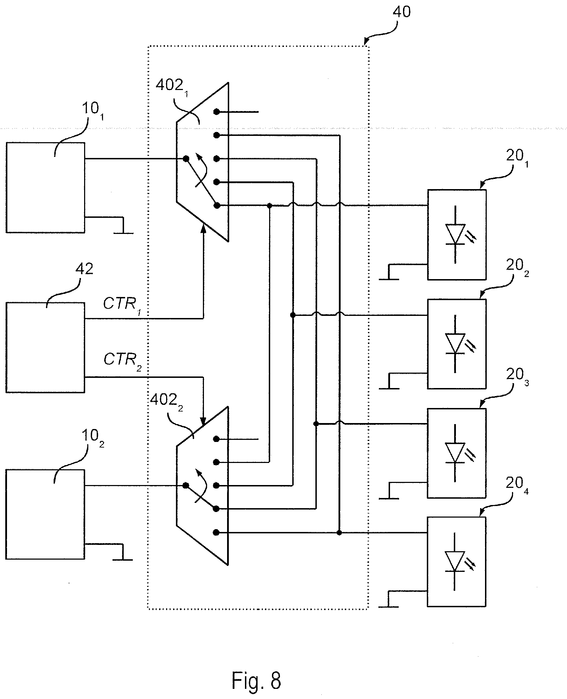

Figure 8 shows a second embodiment of the switching means 40, in which the means 40 comprise an additional state in which the output of an electronic converter 10 is not connected to any lighting module 20. For example, in the embodiment considered, this is shown with an additional output of the power de-multiplexers 402 that is not connected to a lighting module 20.

Consequently, in the embodiments considered, up to two lighting modules 20 can be powered simultaneously.

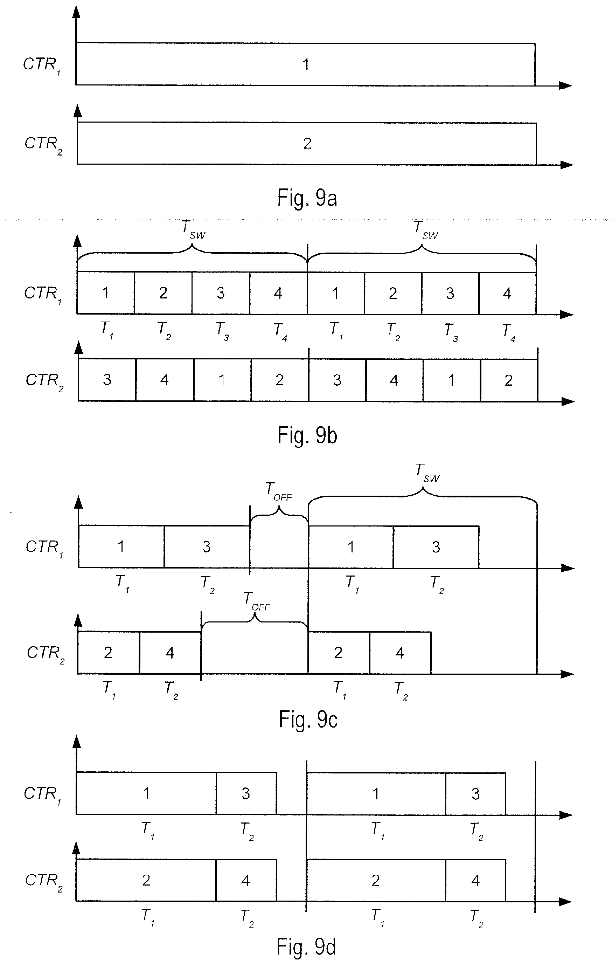

For example, as shown in Figure 9a, the control circuit 42 can drive the means 40 in such a way that the first electronic converter $10_1$ is connected to a first lighting module 20, for example, the module $20_1$, and the second electronic converter $10_2$ is connected to a second lighting module 20, for example, the module $20_2$, i.e. the modules $20_3$ and $20_4$ are disconnected/switched off.

In general, the control circuit 42 can also be configured to sequentially connect the lighting modules 20 to the electronic converters 10.

For example, Figure 9b shows an embodiment, in which the control circuit 42 generates a control signal $CTR_1$ having a modulation period $T_{SW}$. For example, in the embodiment considered, the modulation period $T_{SW}$ comprises four time intervals $T_1$, $T_2$, $T_3$ and $T_4$ which therefore allows the lighting modules $20_1$, $20_2$, $20_3$ and $20_4$ to be sequentially connected to the first converter $20_1$. Similarly, the control circuit 42 generates a control signal $CTR_2$ having a modulation period $T_{SW}$ comprising four time intervals $T_1$, $T_2$, $T_3$ and $T_4$, which then allow the lighting modules $20_1$, $20_2$, $20_3$ and $20_4$ to be sequentially connected to the second converter $20_2$. Preferably, the control signals $CTR_1$ and $CTR_2$ are synchronized and the control unit uses different sequences for the control signals $CTR_1$ and $CTR_2$ avoiding the occurrence of an instant in which both electronic converters 10 are connected to the same lighting module 20.

In the case in which switching means 40 are used that allow disconnection of the electronic converter (see Figure 8), the control circuit 42 can also introduce an interval $T_{OFF}$ into the modulation period $T_{SW}$, in which no lighting module 20 is connected to the electronic converter 10. For example, this mode can be used to perform a dimming operation.

For example, as shown in Figure 9c, the control circuit 42 can generate the control signal $CTR_1$, in such a way as to connect the lighting modules $20_1$ and $20_3$ - for the respective periods $T_1$ and $T_2$ - to the first electronic converter $20_1$, and a period $T_{OFF}$, in which the electronic converter $20_1$ is disconnected, with

$$T_{SW} = T_1 + T_2 + T_{OFF}.$$

Similarly, the control circuit 42 can generate the control signal $CTR_2$, in such a way as to connect the lighting modules $20_2$ and $20_4$ - for the respective periods $T_1$ and $T_2$ - to the second electronic converter $20_2$, and a period $T_{OFF}$, in which the electronic converter $20_2$ is disconnected. Preferably, the period $T_{SW}$ is the same for both control signals, but the durations of the various intervals $T_1$, $T_2$ and $T_{OFF}$ may vary. Therefore, by varying the durations $T_1$, $T_2$ and $T_{OFF}$ the control circuit 42 can adjust the brightness of the lighting modules $20_1$, $20_2$,

$20_3$ and $20_4$.

Substantially, in the embodiment considered, each lighting module $20_1$, $20_2$, $20_3$ and $20_4$ receives a power supply signal with PWM. In fact, with two electronic converters, each lighting module $20_1$, $20_2$, $20_3$ and $20_4$ can have a duty cycle that varies between 0 and 100%, with the only constraint that the total sum of duty cycles is at most 200%. Preferably the frequency of the PWM $f_{SW} = 1/T_{SW}$ is between 100 Hz and 2 kHz. For example, as shown in Figure 9d, lighting modules $20_1$ and $20_2$ can be powered with a duty cycle of over 50% and lighting modules $20_3$ and $20_4$ can be powered with a duty cycle of less than 50%.

In general, in the embodiments previously considered, each lighting module 20 can be connected to each electronic converter. However, this is not always necessary and, in various embodiments, the switching means 40 may also not allow all possible connections between the lighting modules 20 and the electronic converters 10.

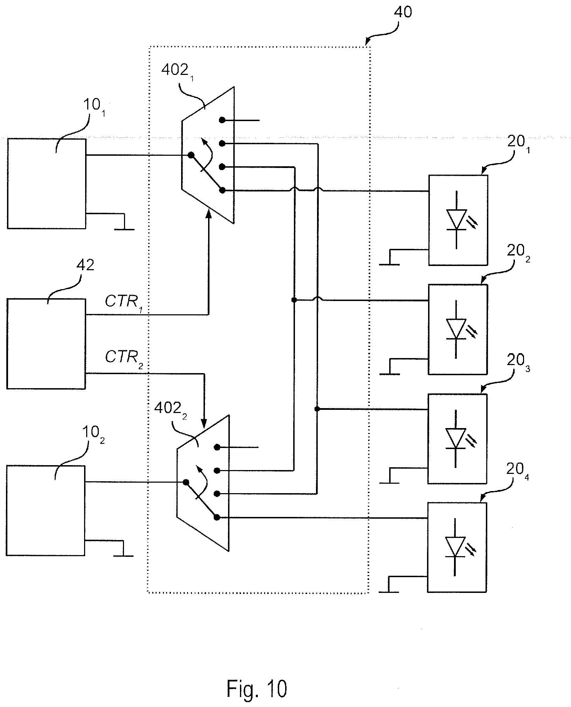

For example, Figure 10 shows an embodiment, in which the lighting module $20_1$ may only be connected to the electronic converter $10_1$ and the lighting module $20_4$ may only be connected to the electronic converter $10_2$, i.e. these two modules represent a chained load. Instead, the other two lighting modules $20_2$ and $20_3$ can be connected to both electronic converters 10, i.e. these two modules represent a movable load.

In various embodiments, the control circuit 42 is therefore configured to prioritize the power supply of the chained loads, and the moveable loads are only also supplied if an electronic converter is still unused. The control system 42 can also decide to dim the modules, and therefore alternate the power supply between chained and movable loads in the absence of other available converters, so as to allow the loads to all have access to the power supply at some time.

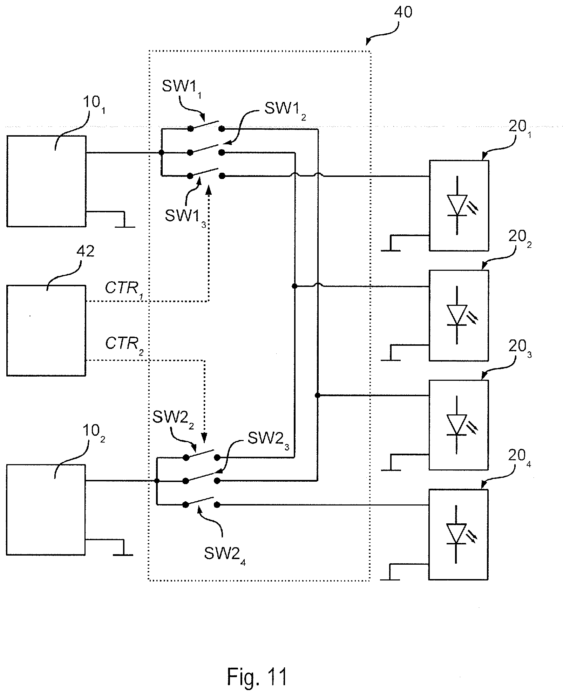

Figure 11 shows an embodiment in which the implementation of the switching means 40, in particular of the de-multiplexers $402_1$ and $402_2$ shown in Figure 10, is made through electronic switches.

In particular, in the embodiment, the switching means 40 comprise three electronic switches $SW1_1$, $SW1_2$ and $SW1_3$ connected (for example, directly) between the first electronic converter $10_1$ and a respective lighting module $20_1$, $20_2$ and $20_3$, i.e. the electronic switches $SW1_1$, $SW1_2$ and $SW1_3$ make it possible to connect a respective lighting module $20_1$, $20_2$ and $20_3$ to the first electronic converter $10_1$. Similarly, the switching means 40 comprise three electronic switches $SW2_2$, $SW2_3$ and $SW2_4$ connected (for example, directly) between the second electronic converter $10_2$ and a respective lighting module $20_2$, $20_3$ and $20_4$, i.e. the electronic switches $SW2_2$, $SW2_3$ and $SW2_4$ make it possible to connect a respective lighting module $20_2$, $20_3$ and $20_4$ to the second electronic converter $10_2$.

Therefore, in the embodiment considered, the control circuit 42 generates the control signals for the switches $SW1_1$, $SW1_2$ and $SW1_3$ so as to close one or none of the switches $SW1_1$, $SW1_2$ and $SW1_3$. Similarly, the control circuit 42 generates control signals for the switches $SW2_2$, $SW2_3$ and $SW2_4$ so as to close one or none of the switches $SW2_2$, $SW2_3$ and $SW2_4$.

In general, by adding two additional switches $SW1_4$ (between the converter $10_1$ and the lighting module $20_4$) and $SW2_1$ (between the converter $10_2$ and the lighting module $20_1$), it is also possible to implement the switching means 40 shown in Figure 8.

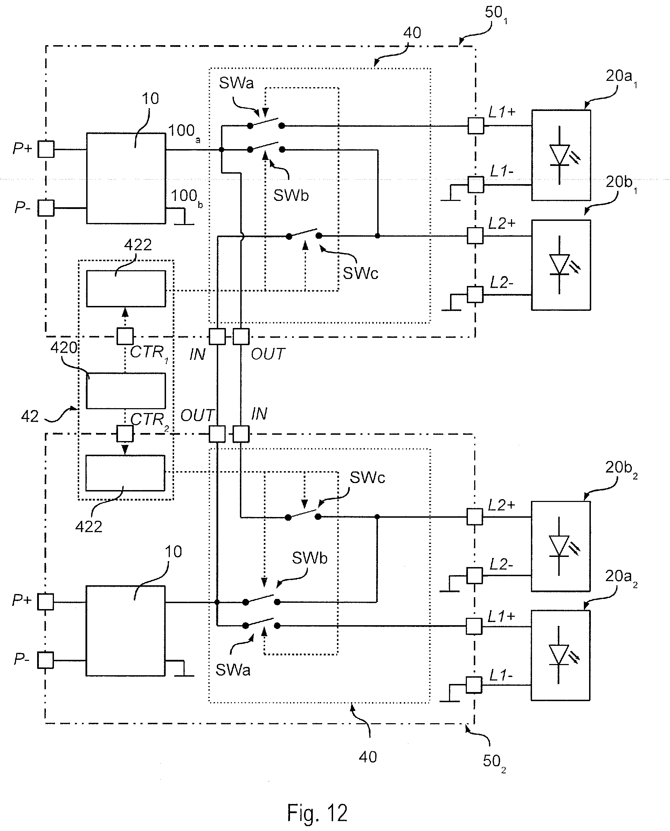

Figure 12 shows another embodiment of the lighting system, which substantially corresponds - from the point of view of the electrical scheme - to that of Figure 11.

In particular, in the embodiment considered, power supply modules 50 are formed that comprise an electronic converter and the respective switching means 40 for powering two lighting modules 20a and 20b. For example, in the embodiment considered, two power supply modules $50_1$ and $50_2$ are shown.

In particular, in the embodiment considered, each power supply module 50 comprises a positive terminal *P+* and a negative terminal *P-* to receive a power supply, such as, for example, a CC voltage.

The terminals *P+* and *P-* are connected (internally and, for example, directly) to the input terminals of an electronic converter 10, i.e. the electronic converter 10 receives the power supply that is applied to the terminals *P+* and *P-*. Preferably, the terminals *P+* and *P-* of the various power supply modules 50 are connected externally to the same power supply, in such a way that the terminal *P-* may represent a common voltage reference. Accordingly, the negative terminal 100b of the electronic converter 10 may also be connected to the terminal *P-*, in such a way that the electronic converters 10 of the various power supply modules 50 use the same voltage reference.

For example, similar to Figure 5, the power supply applied to the terminals *P+* and *P-* may be obtained by means of a common rectifier circuit 30 and possibly an electronic converter 32, such as, for example, a converter with correction of the power factor that supplies a regulated voltage $V_{BUS}$.

The electronic converter 10 of the module 50 then generates a regulated voltage or a regulated current through its output 100a and 100b, which can be used to power a lighting module 20. As a function of the input and output voltages, the electronic converter 10 may be, for example, a buck, boost or buck-boost converter.

In particular, to this end, each power supply module 50 comprises a first positive terminal *L1+* and a first negative terminal *L1-* for connection to a first lighting module 20a and a second positive terminal *L2+* and a second negative terminal *L2-* for connection to a second lighting module 20b. In general, the terminal *L2-* is optional, since the negative terminal *L2-* could also be connected externally to the terminal *L1-*.

Furthermore, each power supply module 50 comprises an output terminal *OUT* to provide the power supply generated by the electronic converter 10 to another power supply module 50, and an input terminal *IN* to receive power supplied by another power supply module 50.

In the embodiment considered, each power supply module 50 therefore comprises switching means 40 configured to selectively connect the terminals *L1+* and *L2+* to the positive terminal 100a of the converter 10 or to the terminal *IN*.

For example, in the embodiment considered the switching means 40 of the power supply module 50 comprise:

- a first switch SWa connected (for example, directly) between the terminal *L1+* and the terminal 100a of the electronic converter 10;
- a second switch SWb connected (for example, directly) between the terminal *L2+* and the terminal 100a of the electronic converter 10; and
- a third SWc switch connected (for example, directly) between the terminal *L2+* and the terminal *IN.*

Furthermore, in the embodiment considered, the terminal *OUT* is connected (for example, directly) to the terminal 100a of the electronic converter 10, i.e. the terminal *OUT* always supplies the power supply signal generated by the electronic converter 10.

In various embodiments, the power supply module 50 may also comprise a part of the control circuit 42. For example, in the embodiment considered, each power supply module 50 comprises a circuit 422, such as, for example, a digital circuit (for example, combinatorial), configured to drive the switches SWa, SWb and SWc as a function of a control signal received via a control terminal *CTR*. In particular, in the embodiment considered, this signal *CTR* is generated by means of a control unit 420, such as, for example, a digital control unit, for example, a microprocessor programmed by means of software code. Therefore, the control unit 420 and the circuits 422 implement the control circuit 42 described previously.

For example, the circuit 422 can perform the following controls according to possible logical levels, or states, of the signal *CTR:*

| CTR | SWa | SWb | SWc |
|-----|-----|-----|-----|
| 1 | 0 | 0 | 0 |
| 2 | 1 | 0 | 0 |
| 3 | 0 | 1 | 0 |
| 4 | 1 | 0 | 1 |
| 5 | 0 | 0 | 1 |

wherein "1" indicates that the switch is closed and "0" indicates that the switch is open, i.e.:

- the lighting modules 20a and 20b are turned off when *CTR* = 1,
- the lighting module 20a (chained load) is powered by means of the electronic converter 10 and the lighting module 20b is switched off when *CTR* = 2;
- the lighting module 20a is switched off and the lighting module 20b (movable load) is powered by means of the electronic converter 10 when *CTR* = 3;
- the lighting module 20a (chained load) is powered by means of the electronic converter 10 and the lighting module 20b (movable load) is powered by means of the terminal *IN* when *CTR* = 4; and
- the lighting module 20a is turned off and the lighting module 20b (movable load) is powered by means of the terminal *IN* when *CTR* = 5.

The last state (*CTR* = 5) is purely optional, since the state *CTR* = 3 is preferable. However, this state can be used in the event that the control circuit 42 detects a malfunction of the electronic converter 10 of the power supply module 50.

Therefore, in the embodiment considered, the power supply modules 50 are independent of each other. Therefore, each power supply module 50 can be produced as an integrated module, for example, on a different printed circuit board.

As mentioned previously, in the embodiment considered, the operation of the power supply modules 50, in particular the switching of the switching means 40, is managed by the control unit 420, which can therefore switch on, switch off and/or adjust the brightness of the various lighting modules 20. For example, the control unit 420 can generate the following control signals $CTR_1$ and $CTR_2$ for the power supply modules $50_1$ and $50_2$, in such a way as to selectively activate the respective lighting modules $20a_1$, $20b_1$, $20a_2$, and $20b_2$ :

| modules turned on | $CTR_1$ | $CTR_2$ |
|-------------------|---------|---------|
| none | 1 | 1 |
| $20a_1$ | 2 | 1 |
| $20b_1$ | 3 | 1 |
| $20a_2$ | 1 | 2 |
| $20b_2$ | 1 | 3 |
| $20a_1$, $20b_1$ | 4 | 1 |
| $20a_1$, $20a_2$ | 2 | 2 |
| $20a_1$, $20b_2$ | 2 | 3 |
| $20b_1$, $20a_2$ | 3 | 2 |
| $20b_1$, $20b_2$ | 3 | 3 |
| $20a_2$, $20b_2$ | 1 | 4 |

In general, the control signals *CTR* can be analog or digital signals capable of transmitting the logic levels of the *CTR* signal. For example, analog signals can be signals with amplitude or frequency modulation or PWM signals. Instead, digital signals can be transmitted over several lines using an encoding, such as a binary or Gray encoding, and/or using a serial transmission protocol.

In general, transmission of the signals *CTR* to the power supply modules 50, in particular to the circuits 422, can also be carried out by means of a BUS, in which the control unit 420 and all the circuits 422 are connected in parallel, and an appropriate communication protocol is used to send the signals *CTR* to the respective power supply modules 50, in particular to the circuits 422. For this purpose, it may also be envisaged that each power supply module 50, in particular the circuits 422, has associated a respective destination address. For example, in various embodiments, the *Digital Addressable Lighting Interface* (DALI) protocol is used for this purpose.

In various embodiments, the control unit 42 may also include an additional communication interface, such as, for example, a DALI interface, for receiving switching-on, switching-off and/or dimming commands for the lighting modules 20a and 20b of each power supply module 50.

As previously explained, in the embodiment considered, the lighting module 50 therefore comprises two terminals *IN* and *OUT* for connecting to another lighting module 50.

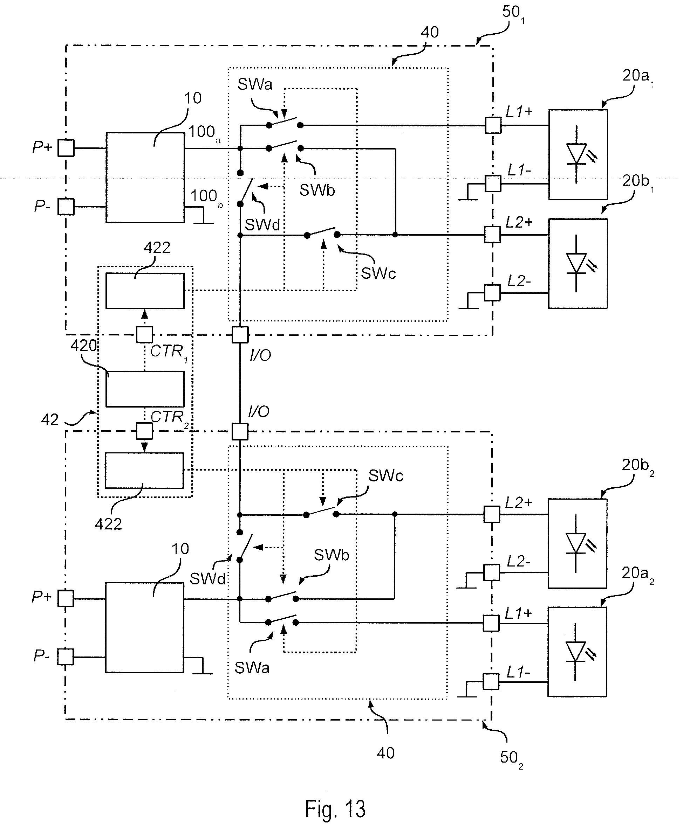

Instead, Figure 13 shows an embodiment, in which the lighting module 50 comprises a single terminal I/O for this purpose.

In particular, in the embodiment considered, the operation of the switches SWa and SWb does not change with respect to Figure 12. Instead, the switch SWc is connected (for example, directly) between the terminal *I/O* and the terminal *L2+* of the power supply module 50. Furthermore, to avoid two power supply modules 50 supplying energy simultaneously through the terminal *I/O*, the power supply module 50 also comprises an additional electronic switch SWd that is connected (for example, directly) between the terminal 100a of the electronic converter 10 and the terminal *I/O*.

In this case, the circuit 422 can perform the following controls according to the previous logic levels of the signal *CTR:*

| CTR | SWa | SWb | SWc | SWd |
|-----|-----|-----|-----|-----|
| 1 | 0 | 0 | 0 | 1 |
| 2 | 1 | 0 | 0 | 0 |
| 3 | 0 | 1 | 0 | 0 |
| 4 | 1 | 0 | 1 | 0 |
| 5 | 0 | 0 | 1 | 0 |

Therefore, in the embodiment considered, only during the state *CTR* = 1 is the electronic converter 10 of the power supply module 50 connected to the terminal *I/O*.

In various embodiments, the circuit 422 can provide an additional state in which all the switches are open:

| CTR | SWa | SWb | SWc | SWd |
|-----|-----|-----|-----|-----|
| 0 | 0 | 0 | 0 | 0 |

For example, this state may be useful, in the event that the control unit 420 detects a malfunction of an electronic converter 10, so as to disconnect said converter 10.

As mentioned previously, the state *CTR* = 5 is purely optional.

In general, the choice of activating a particular lighting module 20 can also be taken in a decentralized manner, i.e. each power supply module 50 can signal, through its own circuit 422, the need to receive the power supply through the terminal *I/O*. In this case, the external control unit 420 can also be omitted and the circuits 422 of the power supply modules 50 can be connected directly to each other. As explained previously, in this case the circuit 422 can be configured to give priority to its own loads, i.e. the circuit 422 only closes the switch SWd if none of its lighting modules 20 needs to be powered.

In general, the solutions described here can also be used with several power supply modules 50 and lighting modules 20.

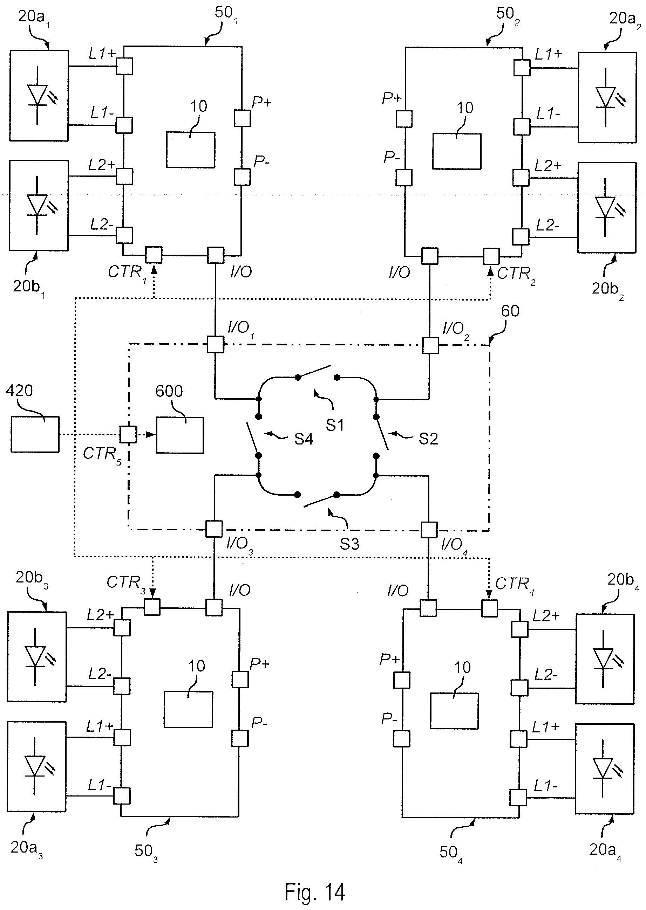

For example, Figure 14 shows an embodiment in which four power supply modules $50_1$, $50_2$, $50_3$ and $50_4$ are provided, as described with reference to Figure 13, i.e. with a single terminal *I/O* for connecting to another lighting module. However, the power supply modules 50 described with reference to Figure 12 could also be used.

In the embodiment considered, up to eight lighting modules $20a_1$, $20b_1$, $20a_2$, $20b_2$, $20a_3$, $20b_3$, $20a_4$ and $20b_4$ may then be connected to the power supply modules 50.

In the embodiment considered, the power supply modules 50 are preferably powered by means of the respective terminals *P+* and *P-* with the same power supply (not shown in the Figure) and, therefore, a further connection between the various modules 50 is not required to provide a common voltage reference.

In the embodiment considered, the system therefore comprises further switching means 60 that allow a connection between the various terminals *I/O* of the power supply modules 50. Therefore, in the embodiment considered, the switching means 60 comprise four terminals $I/O_1$, $I/O_2$, $I/O_3$ and $I/O_4$ that are connected (for example, directly or through cables) to the respective terminals *I/O* of the power supply modules $50_1$, $50_2$, $50_3$ and $50_4$.

For example, in the embodiment considered, the switching means 60 are implemented with a ring comprising four electronic switches S1, S2, S3 and S4, wherein:

- the electronic switch S1 is connected (internally and, for example, directly) between the terminals $I/O_1$ and $I/O_2$;
- the electronic switch S2 is connected (internally and, for example, directly) between the terminals $I/O_2$ and $I/O_4$;
- the electronic switch S3 is connected (internally and, for example, directly) between the terminals $I/O_3$ and $I/O_4$;
- the electronic switch S4 is connected (internally and, for example, directly) between the terminals $I/O_1$ and $I/O_3$;

In the embodiment considered, the switching of the switches S1-S4 is controlled by means of a circuit 600 that - similarly to the circuits 422 of the power supply modules 50 - receives a control signal through a terminal $CTR_5$, for example, from the control unit 420. For example, in the case in which the power supply modules 50 and the switching means 60, in particular the circuit 600, are connected to a common control BUS, each of the circuits 422 and 600 may have a respective address.

In general, the control unit 420 may also be integrated into the circuit 600. Furthermore, the operation of the system may be centralized (by means of the control unit 420, which can decide which power supply module 50 should supply which lighting module 20), or at least partially decentralized, i.e. each of the power supply modules 50 may require an externally generated power supply signal to be applied to its terminal $I/O$.

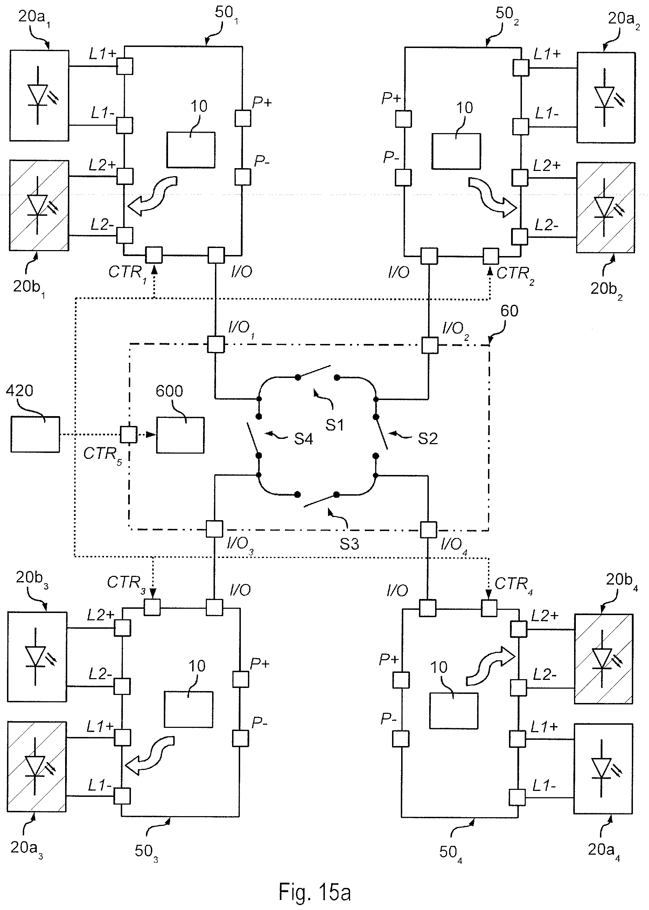

For example, Figure 15a shows a first example of the system configuration of Figure 14. In the embodiment considered, the electronic converter 10 of the power supply module $50_1$ powers the lighting module $20b_1$ (for example, $CTR_1 = 3$), the electronic converter 10 of the power supply module $50_2$ powers the lighting module $20b_2$ (for example, $CTR_2 = 3$), the electronic converter 10 of the power supply module $50_3$ powers the lighting module $20a_3$ (for example, $CTR_3 = 2$) and the electronic converter 10 of the power supply module $50_4$ powers the lighting module $20b_4$ (for example, $CTR_4 = 3$).

Consequently, in the embodiment considered, each electronic converter 10 powers its own load and the switching means 60 are unused.

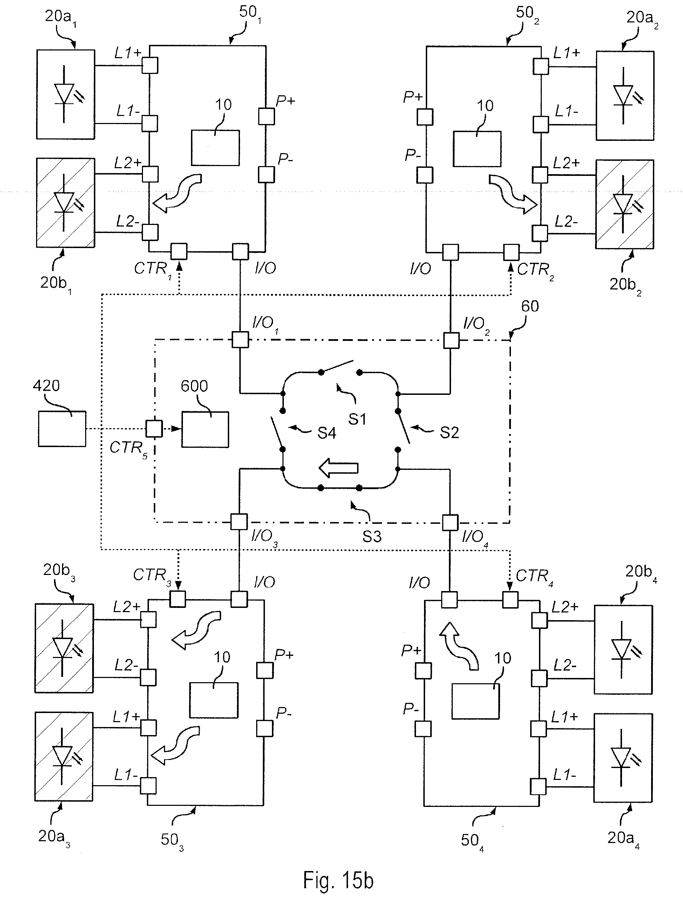

Figure 15b shows a second example of the system configuration of Figure 14. In particular, with respect to Figure 15a, the lighting module $20b_4$ is switched off and the lighting module $20b_3$ should be switched on. Therefore, in the embodiment considered, the power supplied by the electronic converter 10 of the power supply module $50_4$ should be forwarded to the lighting module $20b_3$.

Therefore, the power supply module $50_4$ is reconfigured, so that the power supply generated by the respective converter is forwarded to the terminal I/O of the power supply module $50_4$ (for example, $CTR_4 = 1$)

and the power supply module $50_3$ is reconfigured, so that the additional power supplied to the terminal I/O of the power supply module $50_3$ is forwarded to the lighting module $20b_3$ (for example, $CTR_3 = 4$). Furthermore, the switching means 60 are configured, in such a way that the terminal $I/O4$ is connected to the terminal $I/O_3$, for example, by closing the electronic switch S3.

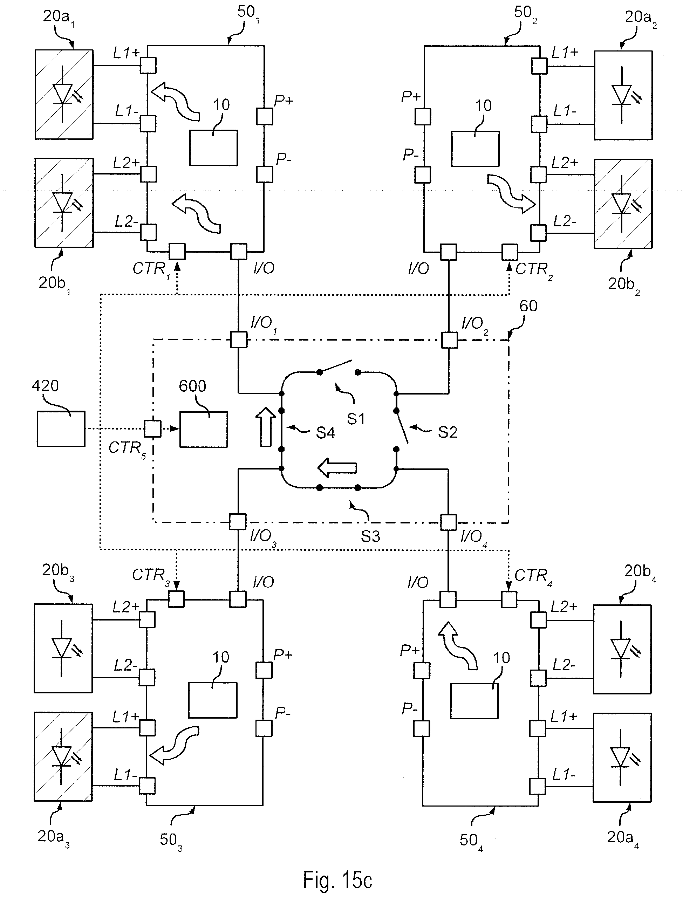

Figure 15c shows a third example of the system configuration of Figure 14. In particular, with respect to Figure 15a, the lighting module $20b_4$ is switched off and the lighting module $20a_1$ should be switched on. Therefore, in the embodiment considered, the power supplied by the electronic converter 10 of the power supply module $50_1$ should be forwarded to the lighting module $20a_1$ and the power supplied by the electronic converter 10 of the power supply module $50_4$ should be forwarded to the lighting module $20b_1$.

Therefore, the power supply module $50_4$ is reconfigured, in such a way that the power supply generated by the respective converter is forwarded to the terminal I/O of the power supply module $50_4$ (for example, $CTR_4 = 1$). Furthermore, the power supply module $50_1$ is reconfigured, so that the power supplied by the electronic converter 10 of the power supply module $50_1$ is now forwarded to the lighting module $20a_1$ and the additional power supplied to the terminal I/O of the power supply module $50_1$ is forwarded to the lighting module $20b_1$ (for example, $CTR_1 = 4$). Furthermore, the switching means 60 are configured, in such a way that the terminal $I/O_4$ is connected to the terminal $I/O_1$, for example by closing the electronic switches S3 and S4.

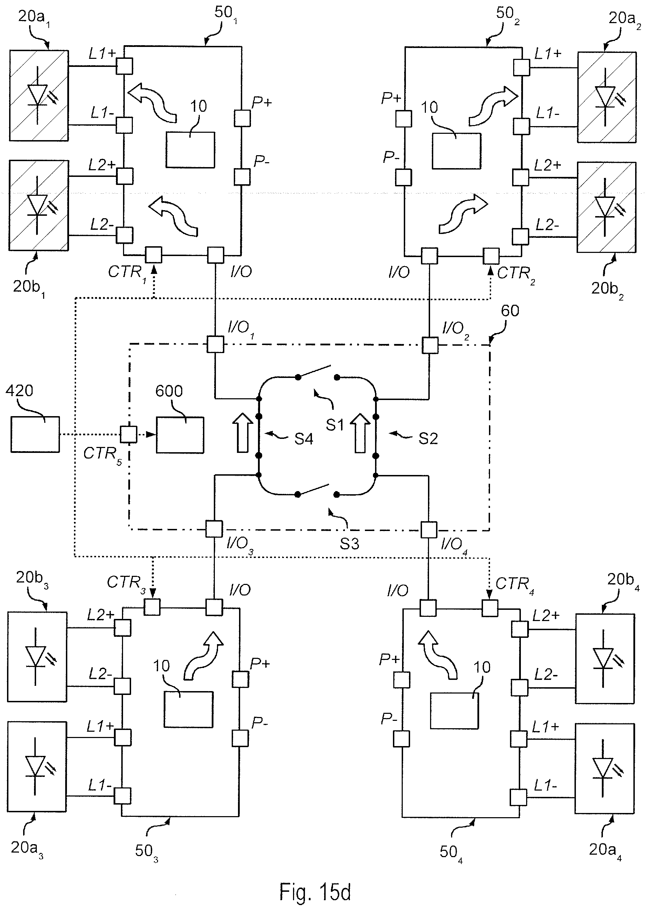

Figure 15d shows a fourth example of the configuration of the system of Figure 14. In particular, with respect to Figure 15c, the lighting module $20b_3$ is switched off and the lighting module $20a_2$ should be switched on.

Therefore, in the embodiment considered, the power supplied by the electronic converter 10 of the power supply module $50_2$ should be forwarded to the lighting module $20a_2$ and the power supplied by the electronic converter 10 of the power supply module $50_3$ should be forwarded to the lighting module $20b_2$. However, when the power supply module $50_4$ supplies power to the module $50_1$, this is not possible with the switching means 60 shown in Figure 14. However, the control unit 420 can reconfigure the system so that the power supply of the power supply module $50_3$ is supplied to the power supply module $50_1$ and the power supply of the power supply module $50_4$ is supplied to the power supply module $50_2$.

Therefore, in the embodiment considered, the power supply module $50_3$ is reconfigured, in such a way that the power supply generated by the respective converter is forwarded to the terminal $I/O$ of the power supply module $50_3$ (for example, $CTR_3 = 1$). Furthermore, the power supply module $50_2$ is reconfigured, so that the power supplied by the electronic converter 10 of the power supply module $50_2$ is forwarded to the lighting module $20a_2$, and the additional power supplied to the terminal

*I/O* of the power supply module $50_2$ is forwarded to the lighting module $20b_2$ (for example, $CTR_1 = 4$). Furthermore, the switching means 60 are configured in such a way that the terminal $I/O_4$ is connected to the terminal $I/O_2$, for example, by closing the electronic switch S2, and the terminal $I/O_3$ is connected to the terminal $I/O_1$, for example, by closing the electronic switch S4.

In general, the switching means 60 can also be more complex.

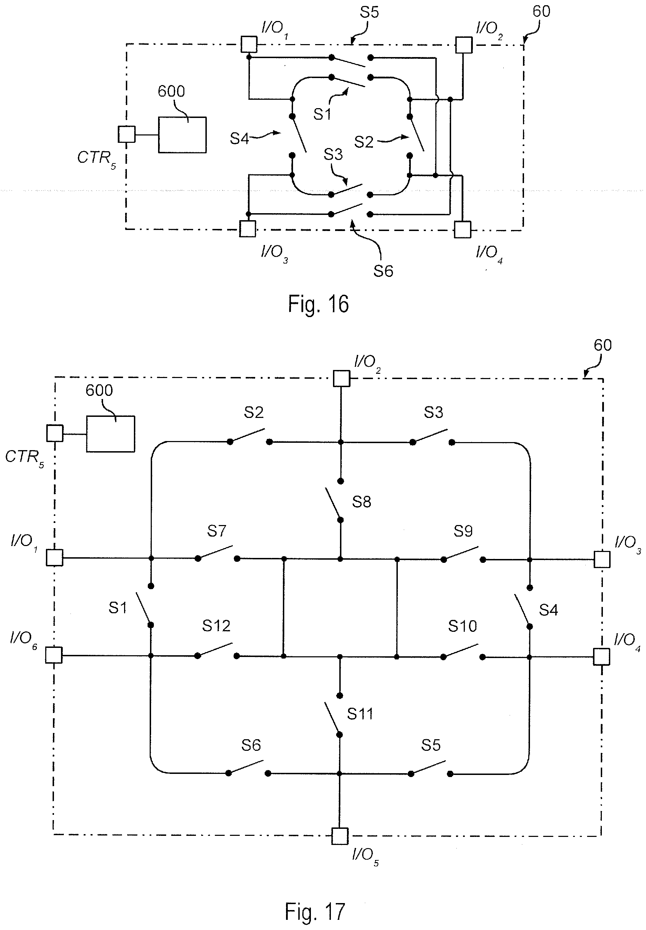

For example, Figure 16 shows substantially the switching means 60 already described with reference to Figure 14, with the addition of two additional electronic switches S5 and S6, wherein:

- the electronic switch S5 is connected (internally and, for example, directly) between the terminals $I/O_1$ and $I/O_4$;
- the electronic switch S6 is connected (internally and, for example, directly) between the terminals $I/O_2$ and $I/O_3$.

Instead, Figure 17 shows an embodiment of the switching means 60, which can also be used with six power supply modules 50. In particular, in the embodiment considered, a structure with several rings in cascade comprising, for example, 12 electronic switches S1-S12 can be used for this purpose.

Therefore, in the solutions described here, each electronic converter 10 is connected, at most, to one lighting module 20, such as, for example, an LED module or a chain of LEDs. Therefore, in various embodiments, the electronic converters 10 have substantially the same characteristics. In particular, in the case in which the electronic converters 10 are current generators, these generators substantially provide the same regulated current $i_{out}$. Similarly, in the case in which the electronic converters 10 are voltage generators, these generators provide substantially the same regulated voltage $V_{out}$.

In various embodiments, the lighting modules 20 are also of the same type, i.e. modules configured to be supplied with the same regulated voltage (see Figure 3) or the same regulated current (see Figure 4).

In various embodiments, all the electronic converters 10 are therefore dimensioned in such a way as to be able to output the maximum power supply that can be required by one of the lighting modules 20.

In general, the maximum power supply of the lighting modules 20 may also be different from one another, for example, the lighting modules 20 may comprise a different number of LEDs L. However, in various embodiments, the lighting modules 20 have the same characteristics, in particular, with reference to the maximum power supply. For example, in various embodiments, each lighting module 20 comprises the same number of LEDs L.

In general, one or more power supply modules 50 of the lighting system could be configured to also allow connection of several lighting modules 20, for example, three lighting modules 20. For example, in this case, the power supply module 50 could comprise an additional terminal *I/O* to receive an additional power supply from an additional power supply module 50.

Moreover, in various embodiments, one or more power supply modules 50 of the system could comprise a plurality of electronic converters 10.

Therefore, in general, each power supply module 50 comprises terminals (e.g. terminals *L1+, L1-, L2+* and possibly *L2-*) for connection to a number $N_{MOD}$ of lighting modules 20. Furthermore, each supply module 50 comprises a number $N_{CONV}$ of electronic converters 10 and at least one output terminal (*OUT* or *I/O*) to supply power to another power supply module 50. Finally, each power supply module 50 comprises a number $N_I$ of terminals (*IN* or *I/O*) to receive a power supply from one or more other power supply modules 50, with $N_I + N_{CONV} \geq N_{MOD}$.

In general, it is not necessary for a lighting module 20 to be connected to each output of the power supply module 50. In this case, the positive terminals for connecting to the lighting modules that are unused (for example, the terminals *L1+* and *L2+*) can be used as output terminals to supply power to other power supply modules 50, which is advantageous if the lighting module 50 comprises a plurality of electronic converters 10.

Of course, without prejudice to the principle of the invention, the details of construction and the embodiments may vary, even significantly, with respect to those illustrated here, purely by way of non-limiting example, without departing from the scope of the invention as defined by the attached claims.

### LIST OF REFERENCE SIGNS

| | |
|---|---|
| electronic converter | 10 |
| terminal | 100 |
| lighting module | 20 |
| LED string | 22 |
| current regulator | 24 |
| terminal | 200 |
| rectifier circuit | 30 |
| electronic converter | 32 |
| switching means | 40 |
| power de-multiplexer | 402 |
| control circuit | 42 |
| control unit | 420 |
| circuit | 422 |
| power supply module | 50 |
| switching means | 60 |
| circuit | 600 |
| capacitor | C |
| control signal | *CTR* |
| I/O terminal | *I/O* |
| input terminal | *IN* |
| regulated current | $i_{out}$ |

(continued)

| | |
|---|---|
| LED | L |
| output terminal | *OUT* |
| positive terminal | P+ |
| negative terminal | P- |
| positive terminal | *L1+* |
| negative terminal | *L1-* |
| positive terminal | *L2+* |
| negative terminal | *L2-* |
| switch | S |
| switch | SW |
| regulated voltage | $V_{out}$ |
| regulated voltage | $V_{BUS}$ |

**Claims**

1. A power supply module ($50_1$) for a lighting system, said power supply module ($50_1$) comprising:

  - an electronic converter (10) comprising a positive terminal (100a) and a negative terminal (100b), wherein said electronic converter (10) is configured to generate a power supply signal ($V_{out}$; $i_{out}$) at said positive terminal (100a) and said negative terminal (100b); and
  - a first positive terminal (*L1+*) and a first negative terminal (*L1-*) adapted to be connected to a first lighting module (20a), wherein said first negative terminal (*L1-*) is connected to said negative terminal (100b) of said electronic converter (10);
  - a second positive terminal (L2+) for connection to a second lighting module (20b);

  **characterized in that** said power supply module ($50_1$) comprises:

  - one or more terminals *(IN, OUT; I/O)* comprising

    - an output terminal (*OUT*) for providing the power ($V_{out}$; $i_{out}$) generated by said electronic converter (10) to a further power supply module ($50_2$), wherein said positive terminal (100a) of said electronic converter (10) is connected to said output terminal (*OUT*), and
    - an input terminal (*IN*) for receiving a further power supply signal from said further power supply module ($50_2$); and

  - switching means (40) configured to selectively connect the positive terminal (100a) of said electronic converter (10) to said first positive terminal (*L1+*) or said second positive terminal (L2+), and wherein said switching means (40) further comprises an electronic switch (SWc) connected between said input terminal (*IN*) and said second positive terminal (*L2+*) to selectively connect said input terminal (*IN*) to said second positive terminal (*L2+*).

2. A power supply module ($50_1$) for a lighting system, said power supply module ($50_1$) comprising:

  - an electronic converter (10) comprising a positive terminal (100a) and a negative terminal (100b), wherein said electronic converter (10) is configured to generate a power supply signal ($V_{out}$; $i_{out}$) at said positive terminal (100a) and said negative terminal (100b); and
  - a first positive terminal (*L1+*) and a first negative terminal (*L1-*) adapted to be connected to a first lighting module (20a), wherein said first negative terminal (*L1-*) is connected to said negative terminal (100b) of said electronic converter (10);
  - a second positive terminal (*L2+*) for connection to a second lighting module (20b);

  **characterized in that** said power supply module ($50_1$) comprises:

  - one or more terminals *(IN, OUT; I/O)* comprising:

    - a terminal (*I/O*) configured to provide the power ($V_{out}$; $i_{out}$) generated by said electronic converter (10) to a further power supply module ($50_2$) and configured to receive a further power supply signal from said further power supply module ($50_2$); and

  - switching means (40) configured to selectively connect the positive terminal (100a) of said electronic converter (10) to said first positive terminal (*L1+*) or said second positive terminal (*L2+*), and wherein said switching means (40) further comprises an electronic switch (SWc) connected between said terminal (*I/O*) and said second positive terminal (*L2+*) to selectively connect said terminal (*I/O*) to said second positive terminal (*L2+*), and a further electronic switch (SWd) connected between said positive terminal (100a) of said electronic converter (10) and said terminal (*I/O*).

3. The power supply module ($50_1$) according to Claim 1 or Claim 2, wherein:

  - said switching means (40) comprise:

    - a first electronic switch (SWa) connected between said positive terminal (100a) of said electronic converter (10) and said first positive terminal (*L1+*),
- a second electronic switch (SWb) connected between said positive terminal (100a) of said electronic converter (10) and said second positive terminal (*L2+*).

**4.** The power supply module (50$_1$) according to any of the previous claims, comprising:

- a control terminal for receiving a control signal (*CTR$_1$*); and
- a control circuit (422) configured to drive said switching means (40) as a function of said control signal (*CTR$_1$*).

**5.** The power supply module (50$_1$) according to any of the previous claims implemented on a single printed circuit board.

**6.** A lighting system comprising at least a first (50$_1$) and a second (50$_2$) power supply module each according to any of the previous claims, and two lighting modules (20a$_1$, 20b$_1$) connected to said first power supply module (50$_1$).

**7.** The lighting system according to Claim 6, wherein said lighting modules (20) are LED modules comprising one or more LEDs (L).

**8.** The lighting system according to Claim 6 or Claim 7 in combination with Claim 4, wherein:

- the control circuit (422) of said first power supply module (50$_1$) is connected to the control circuit (422) of said second power supply module (50$_2$); or
- said system comprises a control unit (420) configured for generating the control signal (*CTR$_1$*) for the first power supply module (50$_1$) and the control signal (*CTR$_2$*) for the second power supply module (50$_2$).

**9.** The lighting system according to Claim 6 or Claim 7, comprising:

- further switching means (60) configured to connect said one or more terminals *(IN, OUT; I/O)* of said first power supply module (50$_1$) to said one or more terminals *(IN, OUT; I/O)* of said second power supply module (50$_2$) as a function of a further control signal (*CTR$_5$*) ; and
- a control unit (420) configured to generate the control signal (*CTR$_1$*) for the first power supply module (50$_1$), the control signal (*CTR$_2$*) for the second power supply module (50$_2$) and said further control signal (*CTR$_5$*).

**10.** A method of operating a lighting system according to any of claims 6 to 9, comprising the steps of:

- connecting one of said one or more terminals (*OUT; I/O*) of said second power supply module (50$_2$) to one of said one or more terminals (*IN; I/O*) of said first power supply module (50$_1$);
- connecting the positive terminal (100a) of said electronic converter (10) of said second power supply module (50$_2$) to said one of said one or more terminals (*OUT; I/O*) of said second power supply module (50$_2$);
- driving the switching means (40) of said first power supply module (50$_1$), such that said one of said one or more terminals (*IN; I/O*) of said first power supply module (50$_1$) is connected to said second positive terminal (*L2+*) of said first power supply module (50$_1$).

**Patentansprüche**

**1.** Stromversorgungsmodul (50$_1$) für ein Beleuchtungssystem, wobei das Stromversorgungsmodul (50$_1$) umfasst:

- einen elektronischen Wandler (10) mit einem positiven Anschluss (100a) und einem negativen Anschluss (100b), wobei der elektronische Wandler (10) so konfiguriert ist, dass er ein Stromversorgungssignal (*V$_{out}$*; *i$_{out}$*) an dem positiven Anschluss (100a) und dem negativen Anschluss (100b) erzeugt; und
- einen ersten positiven Anschluss (L1+) und einen ersten negativen Anschluss (L1-), die zur Verbindung mit einem ersten Beleuchtungsmodul (20a) eingerichtet sind, wobei der erste negative Anschluss (L1-) mit dem negativen Anschluss (100b) des elektronischen Wandlers (10) verbunden ist;
- einen zweiten positiven Anschluss (L2+) zur Verbindung mit einem zweiten Beleuchtungsmodul (20b);

**dadurch gekennzeichnet, dass** das Stromversorgungsmodul (50$_1$) umfasst:

- einen oder mehrere Anschlüsse (IN, OUT; I/O) mit
- einen Ausgangsanschluss (OUT) zum Liefern der von dem elektronischen Wandler (10) erzeugten Leistung (*V$_{out}$*; *i$_{out}$*) an ein weiteres Leistungsversorgungsmodul (50$_2$), wobei der positive Anschluss (100a) des elektronischen Wandlers (10) mit dem Ausgangsanschluss (OUT) verbunden ist, und
- einen Eingangsanschluss (IN) zum Empfangen eines weiteren Leistungsversorgungssignals von dem weiteren Leistungsversorgungs-

modul ($50_2$); und

- Schaltmittel (40), die so konfiguriert sind, dass sie selektiv den positiven Anschluss (100a) des elektronischen Wandlers (10) mit dem ersten positiven Anschluss (L1+) oder dem zweiten positiven Anschluss (L2+) verbinden, und wobei die Schaltmittel (40) ferner einen elektronischen Schalter (SWc) umfassen, der zwischen den Eingangsanschluss (IN) und den zweiten positiven Anschluss (L2+) geschaltet ist, um selektiv den Eingangsanschluss (IN) mit dem zweiten positiven Anschluss (L2+) zu verbinden.

2. Stromversorgungsmodul ($50_1$) für ein Beleuchtungssystem, wobei das Stromversorgungsmodul ($50_1$) umfasst:

   - einen elektronischen Wandler (10) mit einem positiven Anschluss (100a) und einem negativen Anschluss (100b), wobei der elektronische Wandler (10) so konfiguriert ist, dass er ein Stromversorgungssignal ($V_{out}$; $i_{out}$) an dem positiven Anschluss (100a) und dem negativen Anschluss (100b) erzeugt; und
   - einen ersten positiven Anschluss (L1+) und einen ersten negativen Anschluss (L1-), die zur Verbindung einem ersten Beleuchtungsmodul (20a) eingerichtet sind, wobei der erste negative Anschluss (L1-) mit dem negativen Anschluss (100b) des elektronischen Wandlers (10) verbunden ist;
   - einen zweiten positiven Anschluss (L2+) zur Verbindung mit einem zweiten Beleuchtungsmodul (20b);

   **dadurch gekennzeichnet, dass** das Stromversorgungsmodul ($50_1$) umfasst:

   - einen oder mehrere Anschlüsse (IN, OUT; I/O) mit
   - einen Anschluss (I/O), der so konfiguriert ist, dass er die von dem elektronischen Wandler (10) erzeugte Leistung ($V_{out}$; $i_{out}$) an ein weiteres Leistungsversorgungsmodul ($50_2$) liefert, und so konfiguriert ist, dass er ein weiteres Leistungsversorgungssignal von dem weiteren Leistungsversorgungsmodul ($50_2$) empfängt; und
   - Schaltmittel (40), die so konfiguriert sind, dass sie selektiv den positiven Anschluss (100a) des elektronischen Wandlers (10) mit dem ersten positiven Anschluss (L1+) oder dem zweiten positiven Anschluss (L2+) verbinden, und wobei die Schaltmittel (40) ferner einen elektronischen Schalter (SWc), der zwischen den Anschluss (I/O) und den zweiten positiven Anschluss (L2+) geschaltet ist, um selektiv den Anschluss (I/O) mit dem zweiten positiven Anschluss (L2+) zu verbinden, und einen weiteren elektronischen Schalter (SWd) umfassen, der zwischen den positiven Anschluss (100a) des elektronischen Wandlers (10) und den Anschluss (I/O) geschaltet ist.

3. Stromversorgungsmodul ($50_1$) nach Anspruch 1 oder Anspruch 2, wobei:

   - die Schaltmittel (40) umfassen:
   - einen ersten elektronischen Schalter (SWa), der zwischen dem positiven Anschluss (100a) des elektronischen Wandlers (10) und dem ersten positiven Anschluss (L1+) angeschlossen ist,
   - einen zweiten elektronischen Schalter (SWb), der zwischen dem positiven Anschluss (100a) des elektronischen Wandlers (10) und dem zweiten positiven Anschluss (L2+) angeschlossen ist.

4. Stromversorgungsmodul ($50_1$) nach einem der vorstehenden Ansprüche, umfassend:

   - einen Steueranschluss zum Empfangen eines Steuersignals ($CTR_1$); und
   - eine Steuerschaltung (422), die so konfiguriert ist, dass sie die Schaltmittel (40) in Abhängigkeit von dem Steuersignal ($CTR_1$) ansteuert.

5. Stromversorgungsmodul ($50_1$) gemäß einem der vorhergehenden Ansprüche, das auf einer einzigen Leiterplatte implementiert ist.

6. Beleuchtungssystem mit mindestens einem ersten ($50_1$) und einem zweiten ($50_2$) Stromversorgungsmodul, jeweils gemäß einem der vorhergehenden Ansprüche, und zwei Beleuchtungsmodulen (20a1, 20b1), die mit dem ersten Stromversorgungsmodul ($50_1$) verbunden sind.

7. Beleuchtungssystem nach Anspruch 6, wobei die Beleuchtungsmodule (20) LED-Module sind, die eine oder mehrere LEDs (L) umfassen.

8. Beleuchtungssystem nach Anspruch 6 oder Anspruch 7 in Kombination mit Anspruch 4, wobei:

   - die Steuerschaltung (422) des ersten Stromversorgungsmoduls ($50_1$) mit der Steuerschaltung (422) des zweiten Stromversorgungsmoduls ($50_2$) verbunden ist; oder
   - das System eine Steuereinheit (420) umfasst, die so konfiguriert ist, dass sie das Steuersignal ($CTR_1$) für das erste Stromversorgungsmodul ($50_1$) und das Steuersignal ($CTR_2$) für das zweite Stromversorgungsmodul ($50_2$) erzeugt.

9. Das Beleuchtungssystem. nach Anspruch 6 oder Anspruch 7, bestehend aus:

-- weitere Schaltmittel (60), die konfiguriert sind, um den einen oder die mehreren Anschlüsse (IN, OUT; I/O) des ersten Stromversorgungsmoduls ($50_1$) mit dem einen oder den mehreren Anschlüssen (IN, OUT; I/O) des zweiten Stromversorgungsmoduls (502) in Abhängigkeit von einem weiteren Steuersignal ($CTR_5$) zu verbinden; und

- eine Steuereinheit (420), die so konfiguriert ist, dass sie das Steuersignal ($CTR_1$) für das erste Stromversorgungsmodul ($50_1$), das Steuersignal ($CTR_2$) für das zweite Stromversorgungsmodul ($50_2$) und das weitere Steuersignal ($CTR_5$) erzeugt.

10. Verfahren zum Betreiben eines Beleuchtungssystems nach einem der Ansprüche 6 bis 9, umfassend die folgenden Schritte:

- Verbinden eines der einen oder mehreren Anschlüsse (OUT; I/O) des zweiten Stromversorgungsmoduls ($50_2$) mit einem der einen oder mehreren Anschlüsse (IN; I/O) des ersten Stromversorgungsmoduls ($50_1$);
- Verbinden des positiven Anschlusses (100a) des elektronischen Wandlers (10) des zweiten Stromversorgungsmoduls ($50_2$) mit dem einen von dem einen oder den mehreren Anschlüssen (OUT; I/O) des zweiten Stromversorgungsmoduls ($50_2$);
- Ansteuern der Schaltmittel (40) des ersten Stromversorgungsmoduls ($50_1$), so dass der eine von dem einen oder den mehreren Anschlüssen (IN; I/O) des ersten Stromversorgungsmoduls ($50_1$) mit dem zweiten positiven Anschluss (L2+) des ersten Stromversorgungsmoduls ($50_1$) verbunden wird.

**Revendications**

1. Module d'alimentation électrique ($50_1$) pour un système d'éclairage, ledit module d'alimentation électrique ($50_1$) comprenant :

- un convertisseur électronique (10) comprenant une borne positive (100a) et une borne négative (100b), dans lequel ledit convertisseur électronique (10) est configuré de manière à générer un signal d'alimentation électrique ($V_{out}$ ; $i_{out}$) au niveau de ladite borne positive (100a) et de ladite borne négative (100b) ; et
- une première borne positive (L1+) et une première borne négative (L1-) aptes à être connectées à un premier module d'éclairage (20a), dans lequel ladite première borne négative (L1-)

est connectée à ladite borne négative (100b) dudit convertisseur électronique (10) ;
- une seconde borne positive (L2+) destinée à être connectée à un second module d'éclairage (20b) ;

**caractérisé en ce que** ledit module d'alimentation électrique ($50_1$) comprend :

- une ou plusieurs bornes (IN, OUT ; I/O) comprenant :

- une borne de sortie (OUT) destinée à fournir le signal d'alimentation électrique ($V_{out}$ ; $i_{out}$) généré par ledit convertisseur électronique (10) à un module d'alimentation électrique supplémentaire ($50_2$), dans lequel ladite borne positive (100a) dudit convertisseur électronique (10) est connectée à ladite borne de sortie (OUT) ; et
- une borne d'entrée (IN) destinée à recevoir un signal d'alimentation électrique supplémentaire en provenance dudit module d'alimentation électrique supplémentaire ($50_2$) ; et

- un moyen de commutation (40) configuré de manière à connecter sélectivement la borne positive (100a) dudit convertisseur électronique (10) à ladite première borne positive (L1+) ou à ladite seconde borne positive (L2+), et dans lequel ledit moyen de commutation (40) comprend en outre un commutateur électronique (SWc) connecté entre ladite borne d'entrée (IN) et ladite seconde borne positive (L2+) pour connecter sélectivement ladite borne d'entrée (IN) à ladite seconde borne positive (L2+).

2. Module d'alimentation électrique ($50_1$) pour un système d'éclairage, ledit module d'alimentation électrique ($50_1$) comprenant :

- un convertisseur électronique (10) comprenant une borne positive (100a) et une borne négative (100b), dans lequel ledit convertisseur électronique (10) est configuré de manière à générer un signal d'alimentation électrique ($V_{out}$ ; $i_{out}$) au niveau de ladite borne positive (100a) et de ladite borne négative (100b) ; et
- une première borne positive (L1+) et une première borne négative (L1-) aptes à être connectées à un premier module d'éclairage (20a), dans lequel ladite première borne négative (L1-) est connectée à ladite borne négative (100b) dudit convertisseur électronique (10) ;
- une seconde borne positive (L2+) destinée à être connectée à un second module d'éclairage (20b) ;

**caractérisé en ce que** ledit module d'alimentation électrique ($50_1$) comprend :

- une ou plusieurs bornes (*IN, OUT ; I/O*) comprenant :

  - une borne (*I/O*) configurée de manière à fournir le signal d'alimentation électrique ($V_{out}$ ; $i_{out}$) généré par ledit convertisseur électronique (10) à un module d'alimentation électrique supplémentaire ($50_2$), et configurée de manière à recevoir un signal d'alimentation électrique supplémentaire en provenance dudit module d'alimentation électrique supplémentaire ($50_2$) ; et

  - un moyen de commutation (40) configuré de manière à connecter sélectivement la borne positive (100a) dudit convertisseur électronique (10) à ladite première borne positive (*L1+*) ou à ladite seconde borne positive (*L2+*), et dans lequel ledit moyen de commutation (40) comprend en outre un commutateur électronique (SWc) connecté entre ladite borne (*I/O*) et ladite seconde borne positive (*L2+*) pour connecter sélectivement ladite borne (*I/O*) à ladite seconde borne positive (*L2+*), et un commutateur électronique supplémentaire (SWd) connecté entre ladite borne positive (100a) dudit convertisseur électronique (10) et ladite borne (*I/O*).

3. Module d'alimentation électrique ($50_1$) selon la revendication 1 ou 2, dans lequel :

   - ledit moyen de commutation (40) comprend :

     - un premier commutateur électronique (SWa) connecté entre ladite borne positive (100a) dudit convertisseur électronique (10) et ladite première borne positive (*L1+*) ;
     - un second commutateur électronique (SWb) connecté entre ladite borne positive (100a) dudit convertisseur électronique (10) et ladite seconde borne positive *(L2+)*.

4. Module d'alimentation électrique ($50_1$) selon l'une quelconque des revendications précédentes, comprenant :

   - une borne de commande destinée à recevoir un signal de commande ($CTR_1$) ; et
   - un circuit de commande (422) configuré de manière à entraîner ledit moyen de commutation (40) en fonction dudit signal de commande ($CTR_1$).

5. Module d'alimentation électrique ($50_1$) selon l'une quelconque des revendications précédentes, mis en œuvre sur une unique carte de circuit imprimé.

6. Système d'éclairage comprenant au moins un premier module d'alimentation électrique ($50_1$) et un second module d'alimentation électrique ($50_2$) chacun selon l'une quelconque des revendications précédentes, et deux modules d'éclairage ($20a_1$, $20b_1$) connectés audit premier module d'alimentation électrique ($50_1$).

7. Système d'éclairage selon la revendication 6, dans lequel lesdits modules d'éclairage (20) sont des modules de diodes LED comprenant une ou plusieurs diodes LED (L).

8. Système d'éclairage selon la revendication 6 ou 7, en combinaison avec la revendication 4, dans lequel :

   - le circuit de commande (422) dudit premier module d'alimentation électrique ($50_1$) est connecté au circuit de commande (422) dudit second module d'alimentation électrique ($50_2$) ; ou
   - ledit système comprend une unité de commande (420) configurée de manière à générer le signal de commande ($CTR_1$) pour le premier module d'alimentation électrique ($50_1$) et le signal de commande ($CTR_2$) pour le second module d'alimentation électrique ($50_2$) .

9. Système d'éclairage selon la revendication 6 ou 7, comprenant :

   - un moyen de commutation supplémentaire (60) configuré de manière à connecter ladite une ou lesdites plusieurs bornes (*IN, OUT ; I/O*) dudit premier module d'alimentation électrique ($50_1$) à ladite une ou auxdites plusieurs bornes (*IN, OUT ; I/O*) dudit second module d'alimentation électrique ($50_2$) en fonction d'un signal de commande supplémentaire ($CTR_5$) ; et
   - une unité de commande (420) configurée de manière à générer le signal de commande ($CTR_1$) pour le premier module d'alimentation électrique ($50_1$), le signal de commande ($CTR_2$) pour le second module d'alimentation électrique ($50_2$) et ledit signal de commande supplémentaire ($CTR_5$).

10. Procédé de fonctionnement d'un système d'éclairage selon l'une quelconque des revendications 6 à 9, comprenant les étapes ci-dessous consistant à :

    - connecter l'une de ladite une ou desdites plusieurs bornes (*OUT ; I/O*) dudit second module d'alimentation électrique ($50_2$) à l'une de ladite une ou desdites plusieurs bornes (*IN ; I/O*) dudit premier module d'alimentation électrique ($50_1$) ;

- connecter la borne positive (100a) dudit convertisseur électronique (10) dudit second module d'alimentation électrique (50$_2$) à ladite une de ladite une ou desdites plusieurs bornes (*OUT* ; *I/O*) dudit second module d'alimentation électrique (50$_2$) ;

- exciter ledit moyen de commutation (40) dudit premier module d'alimentation électrique (50$_1$), de sorte que ladite une de ladite une ou desdites plusieurs bornes (*IN* ; *I/O*) dudit premier module d'alimentation électrique (50$_1$) est connectée à ladite seconde borne positive (*L2+*) dudit premier module d'alimentation électrique (50$_1$).

EP 3 397 027 B1

Fig. 1

Fig. 2

17

Fig. 3

Fig. 4

Fig. 5

Fig. 6

Fig. 7

Fig. 8

Fig. 9a

Fig. 9b

Fig. 9c

Fig. 9d

Fig. 10

Fig. 11

24

Fig. 12

Fig. 13

26

Fig. 14

Fig. 15a

Fig. 15b

Fig. 15c

Fig. 15d

Fig. 16

Fig. 17

**EP 3 397 027 B1**

## REFERENCES CITED IN THE DESCRIPTION

**Patent documents cited in the description**

- US 20100295472 A1
- IT 102016000080749
- US 2008164759 A1